# EUROPÄISCHE PATENTANMELDUNG

(11) **EP 3 958 446 A1**
(43) Veröffentlichungstag der Anmeldung: **23.02.2022**
(21) Anmeldenummer: 20305943.1
(22) Anmeldetag: 21.08.2020
(51) Int. Cl.: H02K 11/30, H02K 41/03, B65G 54/02

(54) **LINEARMOTORSYSTEM UND BETRIEBSVERFAHREN FÜR EIN SOLCHES**

(71) Anmelder: Schneider Electric Industries SAS, 92500 Rueil Malmaison (FR)
(72) Erfinder: NICKEL, Jürgen, 97297 Waldbüttelbrunn (DE)
(74) Vertreter: Manitz Finsterwald Patent- und Rechtsanwaltspartnerschaft mbB

(57) **Zusammenfassung**

Die Erfindung betrifft ein Linearmotorsystem, insbesondere Transportsystem, z.B. Multicarrier, umfassend: eine Führungsbahn mit einer Mehrzahl von entlang der Führungsbahn verteilt angeordneten Elektromagneten; wenigstens einen Läufer, der von der Führungsbahn geführt und entlang dieser bewegbar ist und einen Antriebsmagneten zum Zusammenwirken mit den Elektromagneten der Führungsbahn zum Bewegen des Läufers umfasst; und eine Steuerungseinrichtung zur Steuerung der Bewegung des Läufers relativ zur Führungsbahn durch entsprechende Ansteuerung der Elektromagneten, wobei die Steuerungseinrichtung dazu eingerichtet ist, den Läufer zu einer Rüttelbewegung anzusteuern.

## Beschreibung

Die vorliegende Erfindung betrifft ein Linearmotorsystem, insbesondere Transportsystem, z.B. Multicarrier, umfassend: eine Führungsbahn mit einer Mehrzahl von entlang der Führungsbahn verteilt angeordneten Elektromagneten; wenigstens einen Läufer, der von der Führungsbahn geführt und entlang dieser bewegbar ist und einen Antriebsmagneten zum Zusammenwirken mit den Elektromagneten der Führungsbahn zum Bewegen des Läufers umfasst; und eine Steuerungseinrichtung zur Steuerung der Bewegung des Läufers relativ zur Führungsbahn durch entsprechende Ansteuerung der Elektromagneten. Die Erfindung betrifft auch ein Verfahren zum Betreiben eines solchen Systems.

Linearmotoren sind heute weit verbreitet. Sie können zum Beispiel dazu eingesetzt werden, Produkte in Industrieanlagen zu bewegen, insbesondere zu transportieren. Zum flexiblen Transport von verschiedensten Produkten sind Multicarrier besonders vorteilhaft. Diese umfassen insbesondere eine Mehrzahl an Läufern, also Transporteinheiten, die einzeln und unabhängig voneinander bewegbar sind. In einem typischen Multicarrier-System ist die Führungsbahn in sich geschlossen, also praktisch endlos, was einen Umlaufbetrieb ermöglicht.

Zum Beispiel in industriellen Anlagen ist es häufig nötig, ein Produkt oder eine Produktmenge zu rütteln, beispielsweise zum Zweck der Komprimierung eines Schüttguts oder zum Zweck des Schüttelns einer Flüssigkeit. Dies erfolgt typischerweise über eine Rüttelplatte. Eine solche erzeugt mechanische Schwingungen meist über einen Elektromotor, insbesondere einen AC-Motor, der eine unwuchtbehaftete Welle antreibt. Nachteilig ist hierbei, dass mit der Rüttelplatte eine aufwändige zusätzliche Mechanik vorgesehen werden muss, die nicht nur in der Bereitstellung, sondern auch in der Wartung kostenintensiv ist. Außerdem bildet die Rüttelplatte häufig eine feste und eigenständige Station in einer Anlage, was bedeutet, dass das betreffende Produkt extra zur Rüttelplatte befördert und an diese übergeben werden muss. Ferner sind häufig das Bewegungsprofil der Rüttelbewegung, ihre Frequenz und/oder ihre Amplitude konstant oder zum Beispiel lediglich manuell anpassbar.

Es ist eine Aufgabe der Erfindung, ein Produkt, welches z.B. in einer Industrieanlage bewegt wird, auf besonders einfache Weise zu rütteln.

Diese Aufgabe wird durch ein Linearmotorsystem gemäß Anspruch 1 gelöst, und insbesondere dadurch, dass die Steuerungseinrichtung dazu eingerichtet ist, den Läufer zu einer Rüttelbewegung anzusteuern.

Das Linearmotorsystem wird also vorteilhafter Weise dazu genutzt, eine Rüttelbewegung auszuführen, wofür im Stand der Technik typischerweise separate Einrichtungen, zum Beispiel Rüttelplatten, vorgesehen wurden. Dabei wird die generell ohnehin vorhandene Fähigkeit der Steuerungseinrichtung, den Läufer zu einer Bewegung anzutreiben, dafür genutzt, eine Rüttelbewegung auszuführen. Es ist also keine zusätzliche Einrichtung zum Rütteln erforderlich. Im Gegenteil kann die Erfindung in einem Linearmotorsystem der eingangs genannten Art grundsätzlich ohne zusätzliche Hardware verwirklicht werden, nämlich insbesondere lediglich durch entsprechende Implementierung in der Software der Steuerungseinrichtung. Weil die Rüttelfunktion grundsätzlich nicht räumlich gebunden ist - d.h. dass nicht wie bei einer gesonderten Rüttelstation nur an einem bestimmten Ort gerüttelt werden kann -, lässt sich eine Anlage, welche das Linearmotorsystem umfasst, insgesamt deutlich kompakter aufbauen. Ferner ist die Anlage besonders flexibel. Auch ist die Rüttelfunktion nicht zeitlich gebunden, sondern kann beispielsweise an beliebigen Orten und Zeitpunkten im Prozess ausgeführt werden.

Bei der Rüttelbewegung handelt es sich grundsätzlich um eine Bewegung mit einem wiederholten Beschleunigungswechsel in Führungsrichtung, d. h. in der "normalen" Bewegungsrichtung des Läufers. Wenn der Läufer abgesehen von der Rüttelbewegung stillsteht, äußert sich die Rüttelbewegung als eine hin-und-her-Bewegung entlang der Führungsbahn. Dabei ist der Bewegungsweg klein. Es handelt sich bei der Rüttelbewegung also um eine Mikrobewegung, dies im Gegensatz zu einer "normalen" Bewegung entlang der Führungsbahn, welche hierin als Makrobewegung bezeichnet wird. Natürlich beschränkt sich der Begriff Mikrobewegung nicht auf eine Bewegung im Mikrometer-Bereich, sondern bezieht sich lediglich darauf, dass die Bewegung klein ist im Vergleich zur normalen bzw. Makrobewegung. Die Makrobewegung kann zum Beispiel eine Bewegung zwischen zwei Stationen einer Industrieanlage sein. Insbesondere kann es sich bei der Makrobewegung um eine Transportbewegung handeln, also um eine Bewegung zum Zweck des Transports eines Produkts von einem Ort zum nächsten.

Grundsätzlich ist es auch möglich, die Rüttelbewegung mit einer "normalen" Bewegung zu kombinieren, also die Rüttelbewegung während einer "normalen" oder Makrobewegung auszuführen. In diesem Fall äußert sich die Rüttelbewegung in einer wiederholten Geschwindigkeitserhöhung und -verringerung. Die Rüttelbewegung kann etwa durch ein wiederholtes jeweils kurzzeitiges Beschleunigen und darauffolgendes Abbremsen des Läufers erzeugt werden. Die Rüttelbewegung während einer Makrobewegung lässt sich auch als hin-und-her-Bewegung im entsprechend der Makrobewegung bewegten Inertialsystem des Läufers betrachten.

Im Zusammenhang mit Flüssigkeiten spricht man anstelle von "Rütteln" auch von "Schütteln". Somit umfasst der Begriff "Rüttelbewegung" auch die Bedeutung "Schüttelbewegung", dies insbesondere für den Fall, dass mit dem Läufer eine Flüssigkeit bewegt wird.

Gemäß einer vorteilhaften Ausführungsform ist vorgesehen, dass die Rüttelbewegung eine Vibration ist. Eine Vibration des Läufers kann zum Beispiel vorteilhaft dazu eingesetzt werden, ein Abführen eines pulvrigen Produkts von dem Läufer zu unterstützen.

Die Rüttelbewegung kann bevorzugt eine Frequenz von wenigstens 10 Hz, weiter bevorzugt wenigstens 25 Hz, weiter bevorzugt wenigstens 50 Hz aufweisen. Alternativ oder zusätzlich kann die Frequenz bevorzugt höchstens 200 Hz, weiter bevorzugt höchsten 150 Hz, betragen.

Alternativ oder zusätzlich kann die Rüttelbewegung bevorzugt eine Amplitude von wenigstens 0,5 mm, weiter bevorzugt wenigstens 1 mm, aufweisen. Die Amplitude kann bevorzugt höchstens 5 mm, weiter bevorzugt höchstens 3 mm, betragen. Bei der Amplitude handelt es sich grundsätzlich um den halben Gesamtweg zwischen zwei Auslenkungsmaxima, bezieht sich also auf einen Nullpunkt, um den gerüttelt wird.

Die Rüttelbewegung kann z.B. zumindest eine Beschleunigung des Läufers und/oder eines am Läufer angeordneten Produkts von 1G, bevorzugt 3G, in der Bewegungsrichtung des Läufers umfassen.

Vorteilhafte Beispiele umfassen, dass die Rüttelbewegung ein Bewegungsprofil, insbesondere in Bezug auf eine Position und/oder eine Geschwindigkeit, aufweist, welches zumindest im Wesentlichen wellenförmig, z.B. sinusförmig, oder dreieckig ist.

Es ist besonders vorteilhaft, wenn die Rüttelbewegung einstellbar und/oder veränderbar ist, insbesondere hinsichtlich einer Frequenz, einer Amplitude und/oder eines Bewegungsprofils der Rüttelbewegung. Dies erlaubt eine besonders flexible Verwendung des Linearmotorsystems in unterschiedlichen Prozessen und insbesondere zum Rütteln von unterschiedlichen Produkten. So kann die Rüttelbewegung etwa für verschiedene Produkte, insbesondere verschiedene Schüttgüter, wie zum Beispiel Reis, Nudeln, Zucker, Mehl, oder auch kleinere Montageteile, und/oder verschiedene Flüssigkeiten, unterschiedlich eingestellt werden. Bei mehreren Läufern ist die Rüttelbewegung insbesondere für jeden Läufer individuell einstellbar und/oder veränderbar.

Besonders vorteilhaft sind Ausführungsformen, bei denen die Rüttelbewegung zeitlich veränderlich ist. Grundsätzlich kann die Rüttelbewegung beispielsweise bedingungsabhängig einstellbar und/oder veränderbar sein, bei mehreren Läufern insbesondere für jeden Läufer individuell. Als Bedingung kann beispielsweise ein Zeitablauf, eine Position des Läufers relativ zur Führungsbahn und/oder ein Zustand eines vom Läufer bewegten Produkts berücksichtigt werden. Eine zeitliche Veränderung der Rüttelbewegung kann beispielsweise durch einen vorgegebenen und/oder vorgebbaren Frequenzverlauf und/oder Amplitudenverlauf, zum Beispiel in Abhängigkeit von der Zeit und/oder einer Position, realisiert werden. Ein Produkt kann sich z.B. zustandsabhängig unterschiedlich verhalten, sodass es sich durch ein optimiertes Rüttelverfahren im Prozess schneller weiterverarbeiten lässt. Dies gilt zum Beispiel bei Produkten, die ausgegossen werden, um sie blasenfrei zu machen.

Zur Illustration von weiteren Vorteilen der vorstehend beschriebenen Ansätze kann zum Beispiel eine industrielle Anwendung betrachtet werden, bei der ein Schüttgut, insbesondere ein Pulver, mittels der Rüttelbewegung komprimiert werden soll. Dabei kann zum Beispiel eine optimale Frequenz und/oder Amplitude zustandsabhängig sein, d. h. für unterschiedliche Komprimierungszustände können unterschiedliche Frequenzen und/oder Amplituden optimal sein. Wenn nun die Frequenz und/oder die Amplitude an den Komprimierungszustand angepasst wird, kann der Komprimierungsvorgang insgesamt beschleunigt werden, weil stets im Wesentlichen die optimale Frequenz bzw. Amplitude zur Anwendung kommt.

Dabei kann der tatsächliche Komprimierungszustand beispielsweise sensorisch ermittelt werden oder auch aus bekannten zeitlichen Zusammenhängen abgeleitet werden. Im Ergebnis kann der Prozess zeitlich und/oder in Bezug auf einen Transportweg verkürzt werden. In kürzerer Zeit bzw. auf kürzerer Strecke kann ein ähnliches oder besseres Ergebnis erzielbar sein. Das vorstehend Gesagte gilt nicht nur für Frequenz und Amplitude, sondern grundsätzlich für alle Eigenschaften der Rüttelbewegung, z.B. auch für ein Bewegungsprofil der Rüttelbewegung.

Die Rüttelbewegung kann beispielsweise andauernd, impulsartig oder pulsierend ausgeführt werden. Es sind auch beliebige Kombinationen hiervon möglich. Letztlich kann ein grundsätzlich beliebig komplexes Rüttelprogramm bedarfsabhängig vorgegeben werden.

Grundsätzlich kann jeder Läufer, insbesondere individuell, bedingungsabhängig, beispielsweise zeit-, positions- und/oder zustandsabhängig, in seiner Rüttelbewegung einstellbar sein, insbesondere im Hinblick auf Frequenz, Amplitude und/oder ein Bewegungsprofil der Rüttelbewegung. Insbesondere kann es hierdurch ermöglicht werden, dass bei unterschiedlichen Geschwindigkeiten einer Längsbewegung des Läufers an der Führungsbahn, also während einer Makrobewegung, immer die gleiche Rüttel- bzw. Schüttel- oder Vibrationsgüte erreicht wird.

Die Rüttelbewegung kann beispielsweise auch protokolliert werden, beispielsweise für ein bestimmtes am Läufer angeordnetes Produkt und/oder für den Zeitraum, in dem ein bestimmtes Produkt am Läufer angeordnet ist. Für sensible Produkte z.B. in der Pharmaindustrie, kann also beispielsweise protokolliert werden, wie lange sie bei einem Abfüll- oder Verpackungsprozess gerüttelt bzw. geschüttelt wurden. Dies kann z.B. auch beim Mischen von mehreren Komponenten, z.B. Pulver, Flüssigkeiten, etc., vorteilhaft sein.

Bei einer vorteilhaften Weiterbildung ist vorgesehen, dass die Rüttelbewegung während einer Längsbewegung des Läufers entlang der Führungsbahn ausführbar ist. Bei der Längsbewegung kann es sich beispielsweise um eine ohnehin vorgesehene Bewegung des Läufers handeln, beispielsweise eine Transportbewegung. Durch die Weiterbildung wird die für diese Bewegung nötige Zeit vorteilhaft dazu genutzt, außerdem die Rüttelbewegung durchzuführen. Hierdurch lassen sich Prozesse insgesamt verkürzen. Insbesondere können somit Unterbrechungen in den Abläufen vermieden werden und es sind insbesondere keine gesonderten Rüttelstationen nötig. Bei der Längsbewegung handelt es sich grundsätzlich um eine Makrobewegung, zum Beispiel eine Bewegung von einer Station zur nächsten. Während dieser Makrobewegung wird das Rütteln, also eine Mikrobewegung ausgeführt.

Alternativ oder zusätzlich kann die Rüttelbewegung auch im Stillstand des Läufers ausführbar sein, d.h. ohne Makrobewegung. Dies kann beispielsweise vorteilhaft sein, wenn ein Produkt gerüttelt werden soll, während es dem Läufer zugeführt wird, wobei das Zuführen im Stillstand erfolgt. Generell können also beispielsweise die Prozesse im Zusammenhang mit stationären Zuführ- und/oder Abführeinrichtungen optimiert werden.

Ferner kann die Rüttelbewegung beispielsweise auch mit einer Längsbewegung in einem Kurvenabschnitt der Führungsbahn kombiniert werden, um eine umlaufende Schwenkbewegung am Produkt zu erzeugen. In der Kurve wirkt eine Zentrifugalkraft auf das Produkt, die bei der Kurvenausfahrt durch die Rüttelbewegung aufgenommen werden kann, sodass eine umlaufende Schwenkbewegung erzeugt und auch über eine längere gerade Fahrt - angetrieben durch die eindimensionale Rüttelbewegung - erhalten bleiben kann. Dieser Ansatz eignet sich also insbesondere dafür, eine mit dem Läufer bewegte Flüssigkeit umlaufend zu schwenken, z.B. zum Zweck einer besonders guten Vermischung von Komponenten der Flüssigkeit.

Bei einer weiteren Ausführungsform ist vorgesehen, dass die Rüttelbewegung an unterschiedlichen Positionen in Bezug auf die Führungsbahn und/oder in unterschiedlichen Abschnitten der Führungsbahn ausführbar ist, insbesondere wobei eine Position und/oder ein Abschnitt auswählbar ist. Hierdurch wird die Flexibilität in der Anwendung des Linearmotorsystems zum Rütteln weiter verbessert. Besonders vorteilhaft ist es, wenn die Rüttelbewegung an beliebiger Position in Bezug auf die Führungsbahn und/oder zu beliebiger Zeit ausführbar ist.

Mit weiterem Vorteil kann das Linearmotorsystem zum Beispiel mehrere, insbesondere unabhängig voneinander bewegbare Läufer umfassen. Bevorzugt können mehrere oder alle Läufer zu einer Rüttelbewegung ansteuerbar sein, insbesondere unabhängig voneinander.

Grundsätzlich kann die Steuerungseinrichtung beispielsweise dazu eingerichtet sein, wenigstens zwei Läufer zu einer synchronen Längsbewegung anzusteuern. Hierdurch ist es etwa möglich, ein Produkt oder einen Container mit den wenigstens zwei Läufern zu transportieren. Somit lassen sich insbesondere auch größere Produkte bzw. Container transportieren.

Bei einem weiteren vorteilhaften Beispiel umfasst das Linearmotorsystem wenigstens zwei Läufer, wobei die Steuerungseinrichtung dazu eingerichtet ist, die Läufer zu einer synchronen Rüttelbewegung anzusteuern. Dies erweist sich z.B. für den Fall als vorteilhaft, dass die wenigstens zwei Läufer gemeinsam ein Produkt tragen und/oder bewegen. Die Rüttelbewegung ist also insbesondere zwischen den Läufern koordiniert, sodass sich der Abstand zwischen den Läufern nicht ändert. Dies kann sich z.B. als besonders vorteilhaft in solchen Anwendungsfällen erweisen, bei denen ein Produkt zwischen zwei Läufern gehalten wird.

Der oder die Läufer können bevorzugt an der Führungsbahn mechanisch geführt sein, insbesondere durch eine Rollenführung.

Ferner ist die Steuerungseinrichtung eines Linearmotorsystems der eingangs genannten Art typischerweise dazu eingerichtet, die Bewegung des Läufers, insbesondere auf Basis einer Rückführungsinformation, wie etwa einer Positionsinformation, zu regeln. Dies erlaubt eine präzise Bewegung des Läufers entlang der Führungsbahn. Beispielsweise kann eine Geschwindigkeitsregelung, eine Positionsregelung, eine Beschleunigungsregelung, eine Stromregelung und/oder eine Kraftregelung vorgesehen sein. Insoweit die Steuerungseinrichtung auch zur Regelung der Bewegung des Läufers eingerichtet ist, bezieht sich diese Regelung grundsätzlich auf die Längsrichtung der Führungsbahn. In Bezug auf diese kann etwa die Position, die Geschwindigkeit und/oder die Beschleunigung des Läufers und/oder die Kraft geregelt werden, welche von den Elektromagneten auf den Läufer ausgeübt wird.

Die Steuerungseinrichtung kann gemäß einem weiteren vorteilhaften Ausführungsbeispiel eine Bewegungsregelung für den Läufer umfassen, insbesondere eine Positions- und/oder Kraftregelung, wobei die Rüttelbewegung über die Bewegungsregelung ausführbar ist. Dabei kann z.B. ein gewünschtes Bewegungsprofil für die Rüttelbewegung als Eingangssignal an die Bewegungsregelung übermittelt werden. Das Bewegungsprofil kann in der Steuerungseinrichtung z.B. aus Vorgabedaten erzeugt werden, beispielsweise aus einer gewünschten Frequenz, einer gewünschten Amplitude und/oder einer Auswahl aus vordefinierten Bewegungsprofilformen. Die Steuerungseinrichtung kann beispielsweise eine Steuerungsbibliothek zur Erzeugung eines Bewegungsprofils, beispielsweise eines Positionsverlauf und/oder Kraftverlaufs, aus Vorgabedaten aufweisen. Unter einer Steuerungsbibliothek ist eine in der Steuerungseinrichtung vorhandene oder verwendete Softwarebibliothek zu verstehen, die Funktionen zur Berechnung eines Bewegungsprofils aus den Vorgabedaten zur Verfügung stellt. Eine solche Steuerungsbibliothek kann grundsätzlich nicht nur in der Steuerungseinrichtung des Linearmotorsystems, sondern beispielsweise auch in einem Prozessleitsystem implementiert sein.

Die Aufgabe der Erfindung wird auch gelöst durch ein Verfahren nach dem hierauf gerichteten, unabhängigen Anspruch, nämlich durch ein Verfahren zum Betreiben eines Linearmotorsystems, insbesondere eines Transportsystems, z.B. eines Multicarrier-Systems, insbesondere eines Linearmotorsystems nach vorstehend beschriebener Art, wobei das Linearmotorsystem umfasst: eine Führungsbahn mit einer Mehrzahl von entlang der Führungsbahn verteilt angeordneten Elektromagneten; wenigstens einen Läufer, der von der Führungsbahn geführt und entlang dieser bewegbar ist und einen Antriebsmagneten zum Zusammenwirken mit den Elektromagneten der Führungsbahn zum Bewegen des Läufers umfasst; und eine Steuerungseinrichtung zur Steuerung der Bewegung des Läufers relativ zur Führungsbahn durch entsprechende Ansteuerung der Elektromagneten; wobei das Verfahren umfasst, dass der Läufer zu einer Rüttelbewegung angesteuert wird.

Während des Verfahrens kann zum Beispiel ein Produkt oder eine Produktmenge am Läufer angeordnet sein oder werden. Das Produkt kann zum Beispiel auf dem Läufer oder auf einer mit dem Läufer verbundenen Auflage aufliegen. Das Produkt kann zum Beispiel auch am Läufer befestigt sein. Zum Beispiel kann das Produkt auch am Läufer hängen. Das Produkt kann auch in einem Container angeordnet sein, der am Läufer angeordnet ist. Für den Container gelten selbst verständlich die gleichen vielfältigen Möglichkeiten der Anordnung am Läufer. Die Rüttelbewegung kann zum Beispiel ausgeführt werden, während das Produkt bzw. der Container am Läufer angeordnet ist oder auch während das Produkt bzw. der Container dem Läufer zugeführt und/oder von diesem abgeführt wird.

Bei dem Produkt kann es sich insbesondere um ein Schüttgut und/oder eine Flüssigkeit handeln. Beispielsweise kann das Produkt ein Pulver, Sand, Kleinteile o. ä. umfassen. Grundsätzlich ist es aber auch möglich, feste Gegenstände zu rütteln. Allgemein kann es sich also bei einem mit dem Läufer bewegten Gegenstand zum Beispiel um ein Produkt, eine Produktmenge oder -anzahl und/oder um einen Container oder sonstigen Träger, z.B. für eine Produktmenge oder -anzahl, handeln. Ein Container kann ebenfalls vielfältige Formen aufweisen, beispielsweise ein Beutel, eine Box, eine Dose oder ein Glas sein.

Gemäß einer vorteilhaften Weiterbildung ist vorgesehen, dass ein am Läufer angeordnetes Produkt mittels der Rüttelbewegung manipuliert wird. Somit lässt sich der Zustand des Produkts auf einfache Weise beeinflussen. Das Produkt kann beispielsweise verdichtet, gelockert, ausgerichtet, vermischt und/oder entgast werden.

Bei einer weiteren Ausführungsform ist vorgesehen, dass das Produkt mittels der Rüttelbewegung vom Läufer abgeführt wird. Das Abführen des Produkts lässt sich mittels der Rüttelbewegung auf einfache Weise unterstützen. Das Abführen kann beispielsweise ein Leeren und/oder Reinigen eines Produktcontainers umfassen. Beispielsweise kann das Abführen auch ein Abkippen umfassen, wobei dann vorteilhafter Weise zusätzlich gerüttelt wird, um das Abkippen zu beschleunigen, zu regulieren und/oder ein gründlicheres Abkippen zu erreichen.

Bei einem weiteren Beispiel ist eine Mehrzahl an Produkten am Läufer angeordnet, wobei die Mehrzahl an Produkten mittels der Rüttelbewegung sortiert wird. Sortierprozesse können durch die Rüttelbewegung auf einfache Weise unterstützt werden. Grundsätzlich kann ein Produkt beispielsweise auch mit Unterstützung der Rüttelbewegung gesiebt werden.

Eine weitere beispielhafte Anwendung des erfindungsgemäßen Verfahrens oder des erfindungsgemäßen Linearmotorsystems bildet zum Beispiel eine Abfüllanlage, etwa zum Abfüllen eines Schüttguts oder einer Flüssigkeit in einen Container.

Hierbei kann das Linearmotorsystem beispielsweise zur Positionierung des Containers an einer Zuführeinrichtung und/oder zum Transport des Containers verwendet werden. Durch die Erfindung lässt sich hier auf einfache Weise das Produkt bzw. der Container rütteln, insbesondere ohne dass der Container zwischenzeitlich auf eine separate Rütteleinrichtung, wie etwa eine Rüttelplatte, überführt werden muss.

Es versteht sich, dass die hierin beschriebenen Verfahren auch im Sinne der in Bezug auf die Vorrichtungen, also insbesondere Linearmotorsystem und Transportsystem, beschriebenen Einzelmerkmale und Ausführungsformen weitergebildet werden kann und umgekehrt.

Die Erfindung wird nachfolgend lediglich beispielhaft anhand der schematischen Zeichnungen erläutert.
- Fig. 1: zeigt ein als Transportsystem ausgebildetes Linearmotorsystem.
- Fig. 2: zeigt einen Kurvenabschnitt des Transportsystems der Fig. 1.
- Fig. 3: zeigt einen Querschnitt des Transportsystems der Fig. 1 mit Schnittebene senkrecht zu einer Führungsbahn.
- Fig. 4: zeigt eine Auftragung unterschiedlicher Bewegungsverläufe mit Rüttelbewegung.

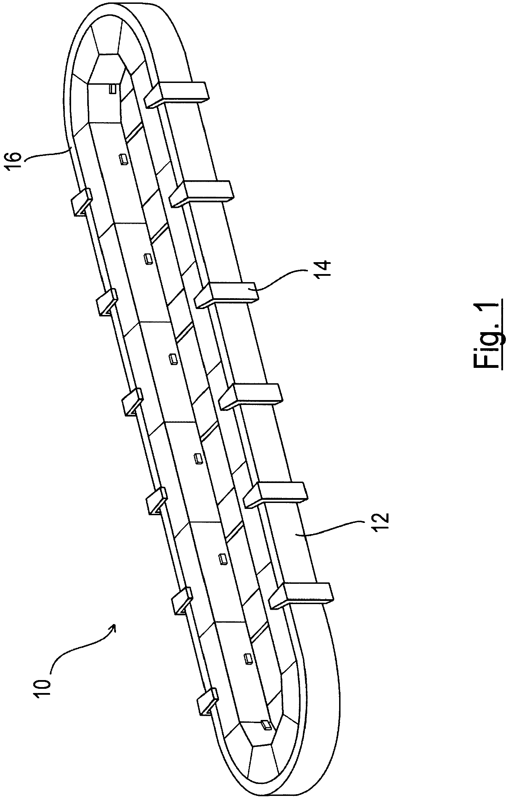

Ein erfindungsgemäßes Transportsystem 10, das als Multi-Carrier-System ausgebildet ist, ist in Fig. 1 dargestellt. Das Transportsystem 10 umfasst mehrere Linearmotoren 12, die aneinandergereiht angeordnet sind, so dass eine durchgehende und in diesem Fall umlaufende Bewegung der Läufer 14 entlang einer Führungsbahn 16 ermöglicht ist. Ferner umfasst das Transportsystem 10 mehrere Läufer 14, die einzelne Transportelemente des Transportsystems 10 bilden und die mittels der Linearmotoren 12 entlang der Führungsbahn 16, insbesondere unabhängig voneinander, bewegt werden können.

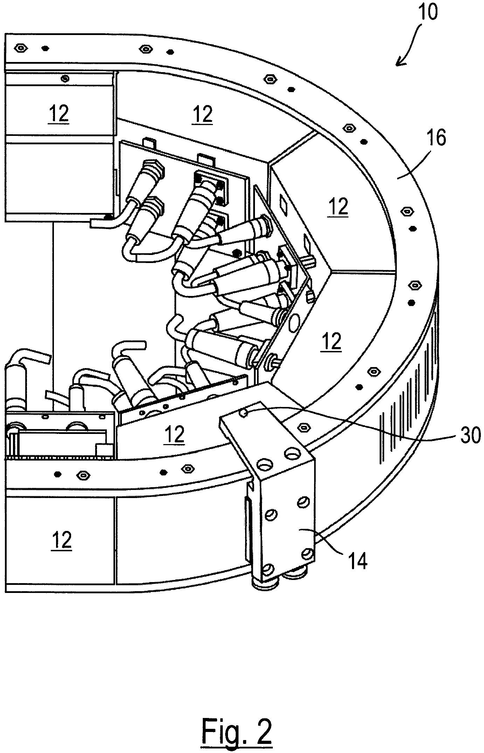

Fig. 2 zeigt einen Kurvenabschnitt des Transportsystems 10 in vergrößerter Ansicht. Hier ist lediglich ein Läufer 14 dargestellt, der entlang der Führungsbahn 16 bewegbar ist, nämlich über die Linearmotoren 12. Auf der dem Läufer 14 abgewandten Seite der Führungsbahn 16, also innerhalb der Kurve, sind verschiedene elektronische Einrichtungen zur Ansteuerung der Linearmotoren 12 sichtbar.

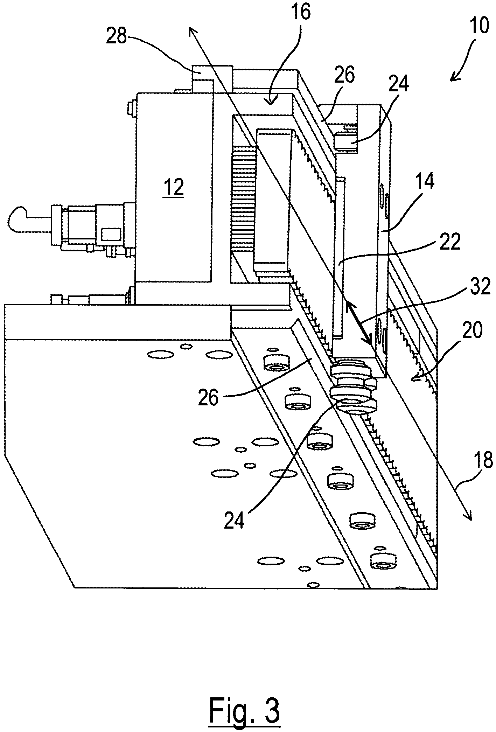

In Fig. 3 ist das Transportsystem 10 in einer Schnittansicht und vergrößert dargestellt. Es ist ein Läufer 14 sichtbar, der an der Führungsbahn 16 beweglich geführt ist. Dabei ist der Läufer 14 entlang einer Führungsachse 18 oder Bewegungsachse bewegbar. Zu einer Bewegung entlang der Führungsachse 18 wird der Läufer 14 durch eine Vielzahl von Elektromagneten 20 angesteuert, die an der Führungsbahn 16 angeordnet und entlang dieser gleichmäßig verteilt sind. Die Elektromagneten 20 wirken dabei mit einem am Läufer 14 angeordneten Permanentmagneten 22, der auch als Antriebsmagnet bezeichnet werden kann, zum Antrieb des Läufers zusammen.

Der Läufer 14 ist an der Führungsbahn 16 mechanisch geführt, nämlich durch eine Rollenführung. Diese umfasst Führungsrollen 24 am Läufer 14 und Führungsschienen 26 an der Führungsbahn 16. Der Läufer 14 wird dabei insbesondere über den Permanentmagneten 22 an der Führungsbahn 16 gehalten.

Das Transportsystem 10 umfasst außerdem eine Positionserfassungseinrichtung 28. Diese kann zum Beispiel als Reihe von einer Vielzahl von Magnetsensoren ausgebildet sein, die sich entlang der Führungsbahn 16 erstreckt. Am Läufer 14 kann zum Beispiel ein Permanentmagnet 30 vorgesehen sein, der auch als Positionsmagnet bezeichnet werden kann und in Fig. 2 sichtbar ist.

Das Transportsystem 10 umfasst außerdem eine nicht separat dargestellte Steuerungseinrichtung, die dazu eingerichtet ist, die Elektromagneten 20 gezielt anzusteuern, um den Läufer 14 entlang der Führungsbahn 16 bzw. der Führungsachse 18 zu bewegen. Die Positionserfassungseinrichtung 28 führt dabei eine Positionsinformation betreffend die Position des Läufers 14 in Bezug auf die Führungsachse 18 zurück zur Steuerungseinrichtung. Die Steuerungseinrichtung regelt die Bewegung des Läufers 14 auf Basis der Positionsinformation.

Die Steuerungseinrichtung ist dazu eingerichtet, den Läufer zu einer Rüttelbewegung 32 anzusteuern, die in Fig. 3 durch einen Doppelpfeil angedeutet ist. Die Rüttelbewegung 32 ist im Stillstand etwa als eine relativ schnelle und kleine hin-und-her-Bewegung entlang der Führungsachse 18 ausgebildet, zum Beispiel mit einer Frequenz von wenigstens 10 Hz und/oder einer Amplitude von höchstens 5 mm. Dies kann allein durch entsprechende Bestromung der Elektromagneten 20 unter Ansteuerung der Steuerungseinrichtung erreicht werden. Das Linearmotorsystem 10 wird im Rahmen seines weitgehend typischen Aufbaus und mit den meist ohnehin vorhandenen Komponenten dazu ausgenutzt, nun zusätzlich eine Rüttelfunktion bereitzustellen. Diese kann zum Beispiel lediglich durch entsprechende Software-Implementierung realisiert werden und zum Beispiel auch auf einfache Weise nachgerüstet werden. Durch die integrierte Rüttelfunktion können einerseits zusätzliche Rütteleinrichtungen wegfallen und andererseits lässt sich ein am Läufer 14 angeordnetes Produkt flexibel und bedarfsgerecht rütteln, beispielsweise an einem beliebigen Ort der Führungsbahn, zu einem beliebigen Zeitpunkt und/oder mit einer beliebigen Form der Rüttelbewegung 32, insbesondere hinsichtlich Frequenz, Amplitude und/oder Bewegungsprofil der Rüttelbewegung 32. Ferner kann das Rütteln sowohl im Stillstand als auch während einer Längsbewegung des Läufers 14 erfolgen. Die Rüttelfunktion der Steuerungseinrichtung kann bevorzugt frei programmierbar sein. Grundsätzlich bevorzugt können die Parameter der Rüttelbewegung 32, nämlich insbesondere Bewegungsprofil, Frequenz und/oder Amplitude, auch während des Betriebs einstellbar und/oder veränderbar sein, insbesondere "on the fly".

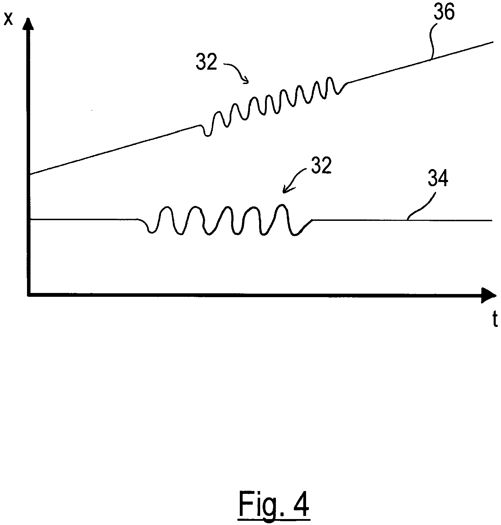

Fig. 4 zeigt eine Auftragung verschiedener Bewegungsverläufe eines Läufers, wobei die Abszisse die Zeit repräsentiert und mit t bezeichnet ist und wobei die Ordinate die Position des Läufers in Bezug auf die Führungsbahn repräsentiert und mit x bezeichnet ist. Die x-Richtung entspricht damit der in Fig. 3 gekennzeichneten Führungsachse 18.

Ein erster Bewegungsverlauf 34 illustriert den Fall, dass eine Rüttelbewegung 32 erfolgt, während sich der Läufer im Hinblick auf seine "normale" oder Makrobewegung im Stillstand befindet. Die Rüttelbewegung 32 weist hier beispielhaft ein wellenförmiges, insbesondere sinusförmiges, Bewegungsprofil auf. Während der Rüttelbewegung 32 wird der Läufer wiederholt um eine Ausgangsposition herum ausgelenkt. Die Amplitude weist dabei insbesondere höchstens wenige Millimeter auf. Zeitlich vor und nach der Rüttelbewegung 32 steht der Läufer völlig still, d. h. er steht im Hinblick auf die Makrobewegung still und wird auch nicht gerüttelt. Dies äußert sich in Fig. 4 durch die waagerechten Abschnitte des Bewegungsverlaufs 34.

Ein zweiter Bewegungsverlauf 36 illustriert den Fall, dass eine Rüttelbewegung 32 erfolgt, während der Läufer eine Makrobewegung durchführt, zum Beispiel eine Bewegung zwischen einer Station im Linearmotorsystem zu einer anderen Station. Die Makrobewegung ist hier durch eine Bewegung mit konstanter Geschwindigkeit gebildet. Insbesondere ohne dass sich die Geschwindigkeit der Makrobewegung verändert, wird während der Makrobewegung eine Rüttelbewegung 32 für einen gewissen Zeitabschnitt durchgeführt. Die Rüttelbewegung 32 weist hier ebenfalls ein wellenförmiges Bewegungsprofil auf, welches insbesondere sinusförmig ist. Allerdings folgt die Rüttelbewegung 32 dabei der bewegten Sollposition des Läufers und oszilliert um diese herum. Zeitlich vor und nach der Rüttelbewegung 32 erfolgt die Makrobewegung mit konstanter Geschwindigkeit und ohne Rüttelbewegung. Dies äußert sich in Fig. 4 durch die geraden Abschnitte des Bewegungsverlaufs 36 mit konstanter Steigung.

### Bezugszeichenliste

- 10: Transportsystem
- 12: Linearmotor
- 14: Läufer
- 16: Führungsbahn
- 18: Führungsachse
- 20: Elektromagneten
- 22: Antriebsmagnet
- 24: Führungsrollen
- 26: Führungsschiene
- 28: Positionserfassungseinrichtung
- 30: Positionsmagnet
- 32: Rüttelbewegung
- 34: Bewegungsverlauf
- 36: Bewegungsverlauf

## Patentansprüche

1. Linearmotorsystem (10), insbesondere Transportsystem, z.B. Multicarrier, umfassend:
eine Führungsbahn (16) mit einer Mehrzahl von entlang der Führungsbahn verteilt angeordneten Elektromagneten (20);
wenigstens einen Läufer (14), der von der Führungsbahn (16) geführt und entlang dieser bewegbar ist und einen Antriebsmagneten (22) zum Zusammenwirken mit den Elektromagneten (20) der Führungsbahn (16) zum Bewegen des Läufers (14) umfasst; und
eine Steuerungseinrichtung zur Steuerung der Bewegung des Läufers (14) relativ zur Führungsbahn (16) durch entsprechende Ansteuerung der Elektromagneten (20),
**dadurch gekennzeichnet,**
**dass** die Steuerungseinrichtung dazu eingerichtet ist, den Läufer (14) zu einer Rüttelbewegung (32) anzusteuern.

2. Linearmotorsystem (10) nach Anspruch 1,
wobei die Rüttelbewegung (32) eine Vibration ist.

3. Linearmotorsystem (10) nach Anspruch 1 oder 2,
wobei die Rüttelbewegung (32) eine Frequenz von wenigstens 10 und/oder höchstens 200 Hz umfasst.

4. Linearmotorsystem (10) nach wenigstens einem der vorstehenden Ansprüche,
wobei die Rüttelbewegung (32) eine Amplitude von wenigstens 0,5 mm und/oder höchstens 5 mm umfasst.

5. Linearmotorsystem (10) nach wenigstens einem der vorstehenden Ansprüche,
wobei die Rüttelbewegung (32) ein Bewegungsprofil, insbesondere in Bezug auf eine Position und/oder eine Geschwindigkeit, aufweist, welches zumindest im Wesentlichen wellenförmig, z.B. sinusförmig, oder dreieckig ist.

6. Linearmotorsystem (10) nach wenigstens einem der vorstehenden Ansprüche,
wobei die Rüttelbewegung (32), insbesondere bedingungsabhängig, einstellbar und/oder veränderbar ist, insbesondere hinsichtlich einer Frequenz, einer Amplitude und/oder eines Bewegungsprofils der Rüttelbewegung (32), und/oder
wobei die Rüttelbewegung (32) zeitlich veränderlich ist.

7. Linearmotorsystem (10) nach wenigstens einem der vorstehenden Ansprüche,
wobei die Rüttelbewegung (32) während einer Längsbewegung des Läufers (14) entlang der Führungsbahn (16) ausführbar ist.

8. Linearmotorsystem (10) nach wenigstens einem der vorstehenden Ansprüche,
wobei die Rüttelbewegung (32) an unterschiedlichen Positionen in Bezug auf die Führungsbahn (16) und/oder in unterschiedlichen Abschnitten der Führungsbahn (16) ausführbar ist, insbesondere wobei eine Position und/oder ein Abschnitt auswählbar ist.

9. Linearmotorsystem (10) nach wenigstens einem der vorstehenden Ansprüche,
wobei das Linearmotorsystem (10) eine Mehrzahl an Läufern (14) umfasst, die zu einer Rüttelbewegung (32) ansteuerbar sind, insbesondere unabhängig voneinander.

10. Linearmotorsystem (10) nach wenigstens einem der vorstehenden Ansprüche,
wobei das Linearmotorsystem (10) wenigstens zwei Läufer (14) umfasst und die Steuerungseinrichtung dazu eingerichtet ist, die Läufer (14) zu einer synchronen Rüttelbewegung (32) anzusteuern.

11. Linearmotorsystem (10) nach wenigstens einem der vorstehenden Ansprüche,
wobei die Steuerungseinrichtung eine Bewegungsregelung für den Läufer (14) umfasst, insbesondere eine Positions- und/oder Kraftregelung, und wobei die Rüttelbewegung (32) über die Bewegungsregelung ausführbar ist.

12. Verfahren zum Betreiben eines Linearmotorsystems (10), insbesondere eines Transportsystems, z.B. eines Multicarrier-Systems, insbesondere eines Linearmotorsystems (10) nach einem der vorstehenden Ansprüche,
wobei das Linearmotorsystem (10) umfasst:
eine Führungsbahn (16) mit einer Mehrzahl von entlang der Führungsbahn (16) verteilt angeordneten Elektromagneten (20);
wenigstens einen Läufer (14), der von der Führungsbahn (16) geführt und entlang dieser bewegbar ist und einen Antriebsmagneten (22) zum Zusammenwirken mit den Elektromagneten (20) der Führungsbahn (16) zum Bewegen des Läufers (14) umfasst; und
eine Steuerungseinrichtung zur Steuerung der Bewegung des Läufers (14) relativ zur Führungsbahn (16) durch entsprechende Ansteuerung der Elektromagneten (20);
wobei das Verfahren umfasst,
dass der Läufer (14) zu einer Rüttelbewegung (32) angesteuert wird.

13. Verfahren nach Anspruch 12,
wobei ein Produkt am Läufer (14) angeordnet wird und
wobei das Produkt mittels der Rüttelbewegung (32) manipuliert wird, insbesondere verdichtet, gelockert, ausgerichtet, vermischt und/oder entgast wird.

14. Verfahren nach Anspruch 12 oder 13,
wobei ein Produkt am Läufer (14) angeordnet wird und
wobei das Produkt mittels der Rüttelbewegung (32) vom Läufer (14) abgeführt wird, beispielsweise zum Leeren und/oder Reinigen eines Produktcontainers, und/oder dem Läufer (14) zugeführt wird.

15. Verfahren nach wenigstens einem der Ansprüche 12 bis 14,
wobei eine Mehrzahl an Produkten am Läufer (14) angeordnet wird und
wobei die Mehrzahl an Produkten mittels der Rüttelbewegung (32) sortiert wird.

## Geänderte Patentansprüche

### Geänderte Patentansprüche gemäss Regel 137(2) EPÜ.

1. Linearmotorsystem (10), insbesondere Transportsystem, z.B. Multicarrier, umfassend:
eine Führungsbahn (16) mit einer Mehrzahl von entlang der Führungsbahn verteilt angeordneten Elektromagneten (20);
wenigstens einen Läufer (14), der von der Führungsbahn (16) geführt und
entlang dieser bewegbar ist und einen Antriebsmagneten (22) zum Zusammenwirken mit den Elektromagneten (20) der Führungsbahn (16) zum Bewegen des Läufers (14) umfasst; und
eine Steuerungseinrichtung zur Steuerung der Bewegung des Läufers (14) relativ zur Führungsbahn (16) durch entsprechende Ansteuerung der Elektromagneten (20), die dazu eingerichtet ist, den Läufer (14) zu einer Rüttelbewegung (32) anzusteuern,
**dadurch gekennzeichnet, dass** das Linearmotorsystem (10) ausgebildet ist,
mittels der Rüttelbewegung (32) ein am Läufer (14) angeordnetes Produkt zum Leeren und/oder Reinigen eines Produktcontainers vom Läufer (14) abzuführen.

2. Linearmotorsystem (10) nach Anspruch 1,
wobei die Rüttelbewegung (32) eine Vibration ist.

3. Linearmotorsystem (10) nach Anspruch 1 oder 2,
wobei die Rüttelbewegung (32) eine Frequenz von wenigstens 10 und/oder höchstens 200 Hz umfasst.

4. Linearmotorsystem (10) nach wenigstens einem der vorstehenden Ansprüche,
wobei die Rüttelbewegung (32) eine Amplitude von wenigstens 0,5 mm und/oder höchstens 5 mm umfasst.

5. Linearmotorsystem (10) nach wenigstens einem der vorstehenden Ansprüche,
wobei die Rüttelbewegung (32) ein Bewegungsprofil, insbesondere in Bezug auf eine Position und/oder eine Geschwindigkeit, aufweist, welches wellenförmig, z.B. sinusförmig, oder dreieckig ist.

6. Linearmotorsystem (10) nach wenigstens einem der vorstehenden Ansprüche,
wobei die Rüttelbewegung (32), insbesondere bedingungsabhängig, einstellbar und/oder veränderbar ist, insbesondere hinsichtlich einer Frequenz, einer Amplitude und/oder eines Bewegungsprofils der Rüttelbewegung (32), und/oder
wobei die Rüttelbewegung (32) zeitlich veränderlich ist.

7. Linearmotorsystem (10) nach wenigstens einem der vorstehenden Ansprüche,
wobei die Rüttelbewegung (32) während einer Längsbewegung des Läufers (14) entlang der Führungsbahn (16) ausführbar ist.

8. Linearmotorsystem (10) nach wenigstens einem der vorstehenden Ansprüche,
wobei die Rüttelbewegung (32) an unterschiedlichen Positionen in Bezug auf die Führungsbahn (16) und/oder in unterschiedlichen Abschnitten der Führungsbahn (16) ausführbar ist, insbesondere wobei eine Position und/oder ein Abschnitt auswählbar ist.

9. Linearmotorsystem (10) nach wenigstens einem der vorstehenden Ansprüche,
wobei das Linearmotorsystem (10) eine Mehrzahl an Läufern (14) umfasst, die zu einer Rüttelbewegung (32) ansteuerbar sind, insbesondere unabhängig voneinander.

10. Linearmotorsystem (10) nach wenigstens einem der vorstehenden Ansprüche,
wobei das Linearmotorsystem (10) wenigstens zwei Läufer (14) umfasst und die Steuerungseinrichtung dazu eingerichtet ist, die Läufer (14) zu einer synchronen Rüttelbewegung (32) anzusteuern.

11. Linearmotorsystem (10) nach wenigstens einem der vorstehenden Ansprüche,
wobei die Steuerungseinrichtung eine Bewegungsregelung für den Läufer (14) umfasst, insbesondere eine Positions- und/oder Kraftregelung, und wobei die Rüttelbewegung (32) über die Bewegungsregelung ausführbar ist.

12. Verfahren zum Betreiben eines Linearmotorsystems (10), insbesondere eines Transportsystems, z.B. eines Multicarrier-Systems, insbesondere eines Linearmotorsystems (10) nach einem der vorstehenden Ansprüche,
wobei das Linearmotorsystem (10) umfasst:
eine Führungsbahn (16) mit einer Mehrzahl von entlang der Führungsbahn (16) verteilt angeordneten Elektromagneten (20);
wenigstens einen Läufer (14), der von der Führungsbahn (16) geführt und
entlang dieser bewegbar ist und einen Antriebsmagneten (22) zum Zusammenwirken mit den Elektromagneten (20) der Führungsbahn (16) zum Bewegen des Läufers (14) umfasst; und
eine Steuerungseinrichtung zur Steuerung der Bewegung des Läufers (14) relativ zur Führungsbahn (16) durch entsprechende Ansteuerung der Elektromagneten (20);
wobei das Verfahren umfasst,
dass der Läufer (14) zu einer Rüttelbewegung (32) angesteuert wird,
**dadurch gekennzeichnet, dass** ein Produkt am Läufer (14) angeordnet wird und das Produkt zum Leeren und/oder Reinigen eines Produktcontainers mittels der Rüttelbewegung (32) vom Läufer (14) abgeführt wird.

13. Verfahren nach Anspruch 12,
wobei das Produkt mittels der Rüttelbewegung (32) manipuliert wird, insbesondere verdichtet, gelockert, ausgerichtet, vermischt und/oder entgast wird.

14. Verfahren nach Anspruch 12 oder 13,
wobei das Produkt mittels der Rüttelbewegung (32) dem Läufer (14) zugeführt wird.

15. Verfahren nach wenigstens einem der Ansprüche 12 bis 14,
wobei eine Mehrzahl an Produkten am Läufer (14) angeordnet wird und wobei die Mehrzahl an Produkten mittels der Rüttelbewegung (32) sortiert wird.
